(19) **Europäisches Patentamt**
**European Patent Office**
**Office européen des brevets**

(11) **EP 3 747 105 B1**

(12) **FASCICULE DE BREVET EUROPEEN**

(45) Date de publication et mention de la délivrance du brevet:
**27.04.2022 Bulletin 2022/17**

(21) Numéro de dépôt: **19701376.6**

(22) Date de dépôt: **29.01.2019**

(51) Classification Internationale des Brevets (IPC):
**H02J 7/00** *(2006.01)*    **H02J 7/34** *(2006.01)*

(52) Classification Coopérative des Brevets (CPC):
**H02J 7/0063; H02J 7/00711; H02J 7/007192; H02J 7/34;** Y02E 10/30

(86) Numéro de dépôt international:
**PCT/EP2019/052136**

(87) Numéro de publication internationale:
**WO 2019/149702 (08.08.2019 Gazette 2019/32)**

(54) **PROCÉDÉ DE FONCTIONNEMENT D'UN APPAREIL ÉLECTRONIQUE COMMUNIQUANT SANS FIL ET APPAREIL ÉLECTRONIQUE COMMUNIQUANT SANS FIL METTANT EN OEUVRE CE PROCÉDÉ**

BETRIEBSVERFAHREN FÜR EINE DRAHTLOS KOMMUNIZIERENDE ELEKTRONISCHE VORRICHTUNG UND DRAHTLOS KOMMUNIZIERENDE ELEKTRONISCHE VORRICHTUNG MIT IMPLEMENTIERUNG DES BESAGTEN VERFAHRENS

OPERATING METHOD FOR A WIRELESSLY COMMUNICATING ELECTRONIC DEVICE, AND WIRELESSLY COMMUNICATING ELECTRONIC DEVICE IMPLEMENTING SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.01.2018 FR 1850752**

(43) Date de publication de la demande:
**09.12.2020 Bulletin 2020/50**

(73) Titulaire: **Somfy Activites SA**
**74300 Cluses (FR)**

(72) Inventeur: **ROBIN, Serge**
**74570 THORENS-GLIERES (FR)**

(74) Mandataire: **Lavoix**
**62, rue de Bonnel**
**69448 Lyon Cedex 03 (FR)**

(56) Documents cités:
**EP-A1- 2 978 276    EP-A2- 0 621 708**
**FR-A1- 2 758 404    US-A1- 2016 254 698**

**Description**

L'invention concerne un procédé de fonctionnement d'un appareil électronique communiquant sans fil. L'invention concerne également un appareil électronique communiquant sans fil mettant en oeuvre ce procédé.

L'invention est applicable au domaine des systèmes domotiques, et plus généralement, au domaine des objets communicants sans fil alimentés électriquement par une réserve d'énergie rechargeable embarquée.

Les objets communicants connus sont des appareils électroniques pourvus d'un émetteur radiofréquence embarqué adapté pour échanger des données avec d'autres appareils distants, par exemple au sein d'un réseau de type « internet des objets ». Pour communiquer avec un appareil distant, ces objets émettent un message radiofréquence au moyen de leur émetteur radiofréquence, qui est alimenté par la réserve d'énergie.

Ces appareils sont typiquement autonomes en énergie électrique, c'est-à-dire qu'ils ne sont pas connectés à un réseau électrique et dépendent uniquement de leur réserve d'énergie interne pour fonctionner. Cette réserve peut être rechargée par un dispositif de récupération d'énergie intégré à l'appareil.

De façon connue, les techniques de récupération d'énergie, nommées « energy harvesting » en langue anglaise, sont utilisées pour générer de faibles quantités d'électricité à partir de sources d'énergie présentes dans l'environnement. Ces sources d'énergie peuvent être des vibrations ou des déplacements d'un organe mécanique, des gradients de température, des rayonnements électromagnétiques tels que des ondes radiofréquence, de la lumière visible ou de la lumière infrarouge, et bien d'autres exemples encore.

Le document EP 2 978 276 A1 décrit un exemple d'un appareil électrique.

Un inconvénient majeur de ces appareils connus est que, du fait du principe même des techniques de récupération d'énergie, il n'est pas possible de savoir à l'avance quelle quantité d'énergie électrique a été collectée par l'appareil à un instant donné et notamment avant l'émission d'un message radiofréquence.

Par exemple, il n'est pas possible de prévoir quel sera à chaque instant la quantité de lumière reçue par un dispositif photovoltaïque de récupération d'énergie, ou de prévoir quand ou avec quelle force un utilisateur appuiera sur un bouton de commande couplé à un dispositif piézoélectrique de récupération d'énergie.

En conséquence, il n'est pas possible de garantir que la réserve d'énergie contiendra, à un instant donné, une quantité d'énergie suffisante pour permettre à l'appareil d'effectuer certaines fonctions. En particulier, il existe un risque que, lorsque l'appareil doit émettre un message radiofréquence, la réserve d'énergie ne contienne pas suffisamment d'énergie électrique pour que le message puisse être émis avec succès, c'est-à-dire qu'il puisse être émis dans son intégralité. Le fonctionnement de l'appareil électronique n'est donc pas garanti en toutes circonstances, ce qui n'est pas satisfaisant.

C'est à ces inconvénients qu'entend plus particulièrement remédier l'invention, en proposant un appareil électronique communiquant sans fil dans lequel la consommation d'énergie est optimisée lors de l'envoi d'un message radiofréquence.

A cet effet, l'invention concerne un procédé de fonctionnement d'un appareil électronique communiquant sans fil, l'appareil électronique comprenant :

- un circuit de commande électronique comprenant un émetteur radiofréquence configuré pour émettre un message radiofréquence selon un protocole de communication et
- une réserve d'énergie électrique rechargeable configurée pour alimenter électriquement l'appareil électronique,

le procédé de fonctionnement étant mis en oeuvre par le circuit de commande électronique et comprenant des étapes :

a) d'acquisition, par le circuit de commande électronique de l'appareil électronique, d'une trame radiofréquence représentative d'au moins une information destinée à être émise par l'émetteur radiofréquence dans un message radiofréquence ;
b) de détermination, par le circuit de commande, de la quantité d'énergie disponible dans la réserve d'énergie ;
c) de détermination, par le circuit de commande, de la longueur du message radiofréquence destiné à être émis, le message radiofréquence comprenant au moins la trame radiofréquence acquise ;
d) de détermination de paramètres d'émission de l'émetteur radiofréquence, la détermination étant mise en oeuvre par le circuit de commande en fonction des valeurs déterminées de la longueur du message et de la quantité d'énergie disponible dans la réserve d'énergie ;
e) d'émission du message radiofréquence par l'émetteur radiofréquence, en utilisant les paramètres d'émission déterminés.

Grâce à l'invention, préalablement à l'envoi de chaque message, les paramètres de fonctionnement de l'émetteur radiofréquence sont automatiquement adaptés en fonction de l'énergie disponible dans la réserve d'énergie.

Selon des aspects avantageux mais non obligatoires de l'invention, un tel procédé peut incorporer une ou plusieurs des caractéristiques suivantes, prises isolément ou suivant toute combinaison techniquement admissible :

- Lors de l'étape b), la détermination de la quantité d'énergie disponible est effectuée à partir de valeurs mesurées de la quantité d'énergie fournie à la réserve d'énergie par un dispositif de récupération d'énergie de l'appareil électronique au cours du temps et à partir de valeurs mesurées de la quantité d'énergie électrique fournie par la réserve d'énergie à l'appareil au cours du temps.
- Lors de l'étape b), la détermination de la quantité d'énergie disponible est estimée :

  b1) en mesurant à vide une première grandeur électrique représentative de la quantité d'énergie disponible de la réserve d'énergie, de préférence une première tension électrique aux bornes de la réserve d'énergie ;
  b2) en mesurant une deuxième grandeur électrique représentative de la quantité d'énergie disponible de la réserve d'énergie, de préférence une deuxième tension électrique aux bornes de la réserve d'énergie, cette mesure étant réalisée suite à un prélèvement d'une quantité d'énergie prédéfinie dans la réserve d'énergie ;
  b3) et en calculant la valeur de la quantité d'énergie disponible dans la réserve d'énergie à partir des première et deuxième valeurs mesurées.

- Le procédé comporte, lors de l'étape b), la mesure de la température au sein de l'appareil électronique, par un dispositif de mesure de la température, et la correction de la quantité d'énergie disponible dans la réserve d'énergie en fonction de la température mesurée.
- L'étape d) comprend la sélection d'un point de fonctionnement particulier parmi un ensemble de points de fonctionnement de l'émetteur prédéfinis stocké dans une mémoire informatique du circuit de commande, l'ensemble de points de fonctionnement prédéfinis définissant des règles de correspondance mettant en relation les points de fonctionnement prédéfinis avec, d'une part, des valeurs ou des intervalles de valeurs de longueurs de messages et, d'autre part, avec des valeurs ou des intervalles de valeurs de quantité d'énergie disponible dans la réserve d'énergie, et dans lequel, le point de fonctionnement particulier est sélectionné en identifiant, au sein de l'ensemble, le point de fonctionnement prédéfini correspondant aux valeurs déterminées de longueur de message et de quantité d'énergie disponible.
- L'étape d) comprend en outre la détermination d'une classe de fonctionnement de l'émetteur radiofréquence.
- L'étape d) comprend en outre la détermination de l'énergie nécessaire à l'émetteur radiofréquence pour émettre un message radiofréquence ayant la longueur déterminée avec une énergie rayonnée prédéterminée.
- Les paramètres d'émission comprennent la classe de fonctionnement et le point de fonctionnement de l'émetteur et dans lequel l'étape d) comprend une sous-étape d'optimisation des classes de fonctionnement et d'un point de fonctionnement de l'émetteur en fonction des valeurs déterminées de la longueur du message et de la quantité d'énergie disponible dans la réserve d'énergie.

Selon un autre aspect, l'invention concerne également un appareil électronique communiquant sans fil et comportant un circuit de commande électronique comportant un émetteur radiofréquence configuré pour émettre un message radiofréquence selon un protocole de communication et une réserve d'énergie électrique rechargeable configurée pour alimenter électriquement l'appareil électronique. Le circuit de commande est programmé pour mettre en œuvre le procédé de fonctionnement tel que décrit précédemment.

Selon des aspects avantageux mais non obligatoires de l'invention, un tel appareil peut également incorporer une ou plusieurs des caractéristiques suivantes, prises isolément ou suivant toute combinaison techniquement admissible :

- L'appareil comporte en outre un dispositif de récupération d'énergie destiné à recharger électriquement la réserve d'énergie, et le circuit de commande est programmé pour mettre en œuvre le procédé de fonctionnement tel que décrit précédemment.
- L'appareil électronique comporte en outre un dispositif de mesure de la température destiné à mesurer la température à l'intérieur de l'appareil, et le circuit de commande est programmé pour, lors de l'étape b), corriger, en fonction de la température mesurée, la valeur de quantité d'énergie disponible déterminée.

L'invention sera mieux comprise et d'autres avantages de celle-ci apparaîtront plus clairement à la lumière de la description qui va suivre, d'un mode de réalisation d'un procédé et d'un appareil électronique donnée uniquement à titre d'exemple et faite en référence aux dessins annexés sur lesquels :

- la figure 1 est une représentation schématique d'un appareil électronique communiquant sans fil conforme à l'invention ;
- la figure 2 est un schéma synoptique d'un circuit de commande électronique de l'appareil électronique de la figure 1 ;

- la figure 3 est un ordinogramme d'un procédé de fonctionnement d'un appareil électronique communiquant sans fil conforme à l'invention et destiné à être mis en oeuvre par l'appareil de la figure 1 ;
- la figure 4 est un ordinogramme détaillant une étape du procédé de la figure 3 selon un des modes de mise en œuvre de l'invention ;
- la figure 5 est une représentation schématique d'une table de valeurs permettant le choix de valeurs de puissance d'émission lors de certains modes de mise en oeuvre du procédé de la figure 3 ;
- la figure 6 est une représentation schématique d'un message à émettre par l'appareil électronique de la figure 1 selon certains modes de mise en œuvre de l'invention ;
- les figures 7 et 8 sont des ordinogrammes détaillant chacun une étape du procédé de la figure 3 selon un des modes de mise en œuvre de l'invention.

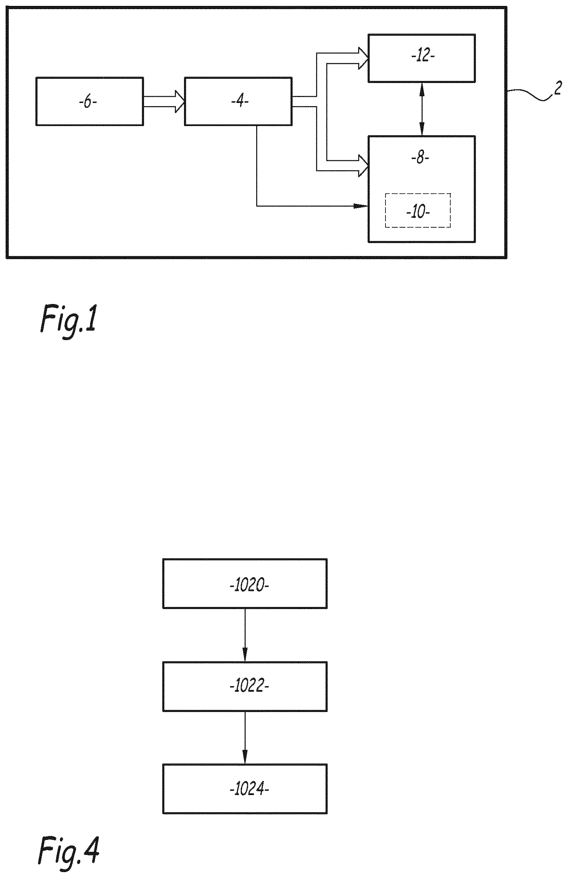

La figure 1 représente un appareil électronique 2 communicant sans fil, adapté pour échanger des données par une liaison radiofréquence avec un récepteur distant selon un protocole de communication. L'appareil 2 est, par exemple, destiné à faire partie d'un réseau d'objets communicants de type « internet des objets ». Dans cet exemple, l'appareil 2 est utilisable au sein d'un système domotique, tel qu'un système de gestion de bâtiment ou d'un système d'alarme, et peut ainsi communiquer par une liaison radiofréquence avec d'autres appareils électroniques du réseau, voire avec un serveur central.

L'appareil 2 comporte une réserve d'énergie électrique rechargeable 4, un dispositif de récupération d'énergie 6 et un circuit de commande 8 électronique comprenant un émetteur radiofréquence 10. La référence « 12 » désigne un sous-ensemble de l'appareil 2 permettant d'implémenter une fonction principale de l'appareil 2. Par exemple, le sous-ensemble 12 est connecté au circuit de commande 8.

Avantageusement, l'appareil 2 comporte un boîtier de protection, à l'intérieur duquel sont logés le circuit de commande 8, la réserve d'énergie 4, et au moins une partie du dispositif de récupération d'énergie 6 et du sous-ensemble 12.

Selon des modes de réalisation de l'invention, l'appareil 2 est un appareil de mesure d'une ou plusieurs grandeurs physiques, par exemple une grandeur physique environnementale telle qu'une température, un taux d'humidité, une luminosité, un taux d'ensoleillement, une pression atmosphérique, et/ou une concentration d'au moins un élément chimique. L'appareil 2 peut, alternativement, être un détecteur de présence humaine, ou un détecteur d'incendie. Dans ces modes de réalisation, le sous-ensemble 12 comporte un capteur adapté pour délivrer un signal représentatif de la ou les grandeurs physiques correspondantes.

Selon d'autres modes de réalisation, l'appareil électronique 2 est un point de commande, destiné à recevoir des instructions provenant d'un utilisateur puis à retransmettre ces instructions en direction d'un autre appareil du réseau, par exemple à destination d'une centrale de commande. Suivant une variante de réalisation, le point de commande retransmet les instructions de l'utilisateur en direction d'un actionneur comme un dispositif d'occultation, un dispositif d'éclairage ou tout autre dispositif domotique.

Dans ces modes de réalisation, le sous-ensemble 12 comporte une interface d'acquisition d'au moins une commande, ou interface homme-machine, comportant un ou plusieurs éléments de sélection comme un bouton et/ou une molette, ou un écran tactile, ou tout autre organe de commande actionnable.

La réserve d'énergie 4, aussi nommé « réservoir d'énergie », a pour fonction de stocker l'énergie électrique nécessaire au fonctionnement de l'appareil 2. La réserve d'énergie électrique 4 est également configurée pour alimenter électriquement l'appareil électronique 2 et notamment le circuit de commande électrique 8. Par exemple, l'appareil 2 est autonome, c'est-à-dire qu'il fonctionne sans nécessairement être connecté à un réseau de distribution électrique.

Selon un premier exemple, la réserve d'énergie 4 est une batterie d'accumulateurs électriques rechargeables, par exemple de technologie lithium-ion, ou de technologie lithium-polymère, ou de technologie nickel-hydrure métallique, ou de technologie nickelcadmium, ou de toute autre technologie appropriée.

Selon un deuxième exemple, la réserve d'énergie 4 comporte un ou plusieurs condensateurs, ou une batterie de super-condensateurs.

D'une manière générale, la réserve d'énergie 4 est un élément de stockage physicochimique.

La réserve d'énergie 4 est ici embarquée à bord de l'appareil 2. Par exemple, la réserve d'énergie 4 a une capacité de stockage inférieure ou égale à 10 Watt.heure.

La réserve d'énergie 4 est connectée électriquement au circuit 8 de commande pour alimenter ce dernier en énergie électrique. Selon des modes de réalisation, lorsque cela est nécessaire, la réserve d'énergie 4 est également connectée au sous-ensemble 12, par exemple, de manière à l'alimenter en énergie électrique.

Le dispositif 6 de récupération d'énergie, nommé « energy harvesting » en langue anglaise, est configuré pour alimenter électriquement la réserve d'énergie 4, en vue de la recharger, à partir d'énergie collectée dans l'environnement de l'appareil 2.

Par exemple, le dispositif 6 de récupération d'énergie est configuré pour collecter de l'énergie électrique à partir de rayonnements solaires, de rayonnements électromagnétiques, de gradients de température, de vibrations ou de déplacements d'un organe mécanique, ou d'une combinaison de plusieurs sources d'énergie ambiante.

Ainsi, selon un exemple, le dispositif 6 de récupération d'énergie comporte un panneau solaire photovoltaïque. Selon un autre exemple, le dispositif 6 comporte une turbine associée à une éolienne. Selon encore un autre exemple, le dispositif 6 comporte un élément électromécanique, par exemple un module piézoélectrique, configuré pour transformer en électricité des déplacements subis par un organe mécanique de l'appareil 2 et notamment du sous ensemble 12.

Selon un exemple de mise en œuvre particulier et non limitatif, si le sous-ensemble 12 comporte une interface d'acquisition pourvue d'un ou plusieurs éléments de sélection actionnables mécaniquement, alors le dispositif 6 de récupération d'énergie peut comporter avantageusement un élément piézoélectrique mécaniquement couplé à un ou plusieurs des éléments de sélection de l'interface d'acquisition. De cette façon, l'actionnement d'un élément de sélection par un utilisateur engendre un déplacement qui est transformé, par l'élément piézoélectrique, en une petite quantité d'énergie électrique apte à recharger la réserve d'énergie 4.

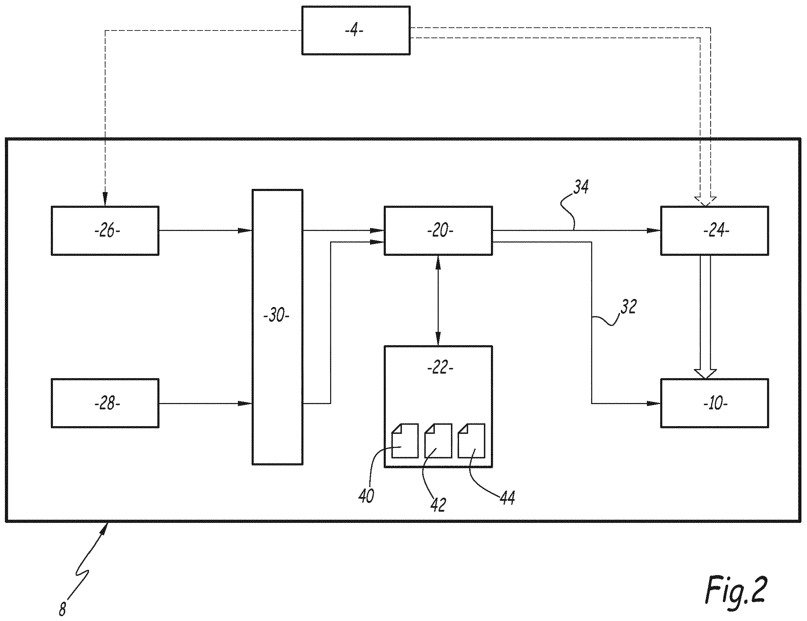

La figure 2 représente un exemple de mode de réalisation du circuit de commande 8. Dans cet exemple, les flèches à double trait symbolisent des liaisons de puissance et les flèches à simple trait symbolisent des liaisons d'échange de données.

Le circuit de commande 8 comporte ici l'émetteur radiofréquence 10, une unité de calcul électronique programmable 20, une mémoire informatique 22, un circuit d'alimentation électrique 24 et un dispositif 26 configuré pour déterminer la quantité d'énergie disponible dans la réserve d'énergie 4. Optionnellement, le circuit électronique 8 peut comporter aussi un dispositif 28 de mesure de la température à l'intérieur de l'appareil 2.

Le dispositif de mesure 26 est adapté pour délivrer un signal représentatif d'au moins une grandeur électrique relative à la réserve d'énergie 4, et plus particulièrement une grandeur électrique représentative de la puissance électrique délivrée par la réserve d'énergie 4. Par exemple, la grandeur électrique est la tension électrique aux bornes de la réserve d'énergie 4. Le dispositif de mesure 26 comporte alors au moins un capteur de tension électrique configuré pour délivrer un signal représentatif de la tension aux bornes de la réserve 4 et/ou un capteur configuré pour délivrer un signal représentatif du courant circulant entre la réserve d'énergie 4 et une charge connectée électriquement à au moins une borne de la réserve d'énergie 4. Le fonctionnement du dispositif de mesure 26 est décrit dans ce qui suit.

Le dispositif 28 de mesure de la température comporte au moins une sonde de température, telle qu'un thermocouple ou une sonde à coefficient de température négatif ou positif, par exemple placée à l'intérieur de l'appareil 2, de préférence à proximité ou au contact de la réserve 4. En variante, le dispositif 28 de mesure de la température peut être omis.

Le circuit 8 de commande comporte ici une interface d'acquisition 30, adaptée pour collecter des signaux de mesure délivrés par les dispositifs de mesure 26, 28 et pour relayer l'information correspondante vers l'unité de calcul 20. Par exemple, l'interface d'acquisition 30 comporte un convertisseur analogique-numérique.

Selon des modes de réalisation, le circuit de commande 8 est un circuit intégré de type système sur puce, aussi nommé « System on Chip » en langue anglaise. En variante, le circuit 8 est une carte électronique pourvue de circuits imprimés sur un support diélectrique et sur laquelle sont montés les constituants du circuit de commande 8.

L'unité de calcul 20 a pour fonction de piloter automatiquement le fonctionnement du circuit de commande 8. Par exemple, l'unité de calcul 20 est un microcontrôleur programmable, ou un micro-processeur, de préférence à basse consommation électrique. Selon un mode de réalisation, l'interface d'acquisition 30 est intégrée à l'unité de calcul 20.

L'unité de calcul 20 est notamment programmée pour piloter l'envoi d'un message radiofréquence à destination d'un récepteur distant appartenant au réseau de communication. A cet effet, l'unité 20 est programmée pour acquérir une trame radiofréquence représentative d'au moins une information destinée à être émise selon un protocole de communication par l'émetteur radiofréquence 10 de l'appareil électronique 2. Par exemple, la trame radiofréquence est généré par le sous-ensemble 12, et est représentative d'une commande reçue et/ou d'au moins une grandeur physique environnementale. La trame radiofréquence peut aussi être représentative d'un message d'alarme et/ou d'un diagnostic relatif à l'état interne de l'appareil électronique 2.

L'unité de calcul 20 est également programmée pour générer un message radiofréquence comprenant au moins la trame radiofréquence acquise. Suivant un mode de mise en œuvre le message radiofréquence peut comprendre une répétition de la trame radiofréquence acquise dans un but de redondance. De façon avantageuse, la répétition de la trame radiofréquence permet d'augmenter la probabilité qu'au moins une trame soit reçue par le récepteur destinataire.

Selon un mode de mise en œuvre, lorsque le message comprend une répétition de trames identiques, les trames successives sont espacées les unes des autres par une pause d'une longueur prédéterminée.

Dans la description, la longueur d'une trame radiofréquence, d'un message radiofréquence ou d'une pause est considérée comme étant équivalente à la durée d'émission respectivement de la trame radiofréquence, du message radiofréquence ou de la pause, ceci à des fins de simplification.

Le message radiofréquence généré peut être émis par l'émetteur radiofréquence 10 à l'initiative de l'unité de calcul 20, ou bien en réponse à une requête reçue de la part d'un autre appareil du réseau. Par exemple, lors de la génération d'un message radiofréquence, l'unité de calcul 20 assure des opérations d'encodage et/ou de modulation du contenu informationnel de la trame radiofréquence, suivant un protocole de communication prédéfini.

L'unité de calcul 20 est également programmée pour piloter le fonctionnement de l'émetteur radiofréquence 10 et du circuit d'alimentation 24 afin d'assurer l'émission du message par voie hertzienne, c'est-à-dire au moyen d'ondes radiofréquence. A cet effet, l'unité 20 est connectée à l'émetteur 10 par une liaison de données 32 et à une interface de régulation du circuit d'alimentation 24 par une liaison de données 34.

La mémoire 22 est ici une mémoire non volatile, comportant par exemple un ou plusieurs modules mémoire de technologie Flash, ou de technologie EEPROM, ou une mémoire magnétique, ou une mémoire à changement de phase, ou toute autre technologie appropriée de stockage d'information. Par exemple, la mémoire 22 forme un support de stockage d'informations non transitoire et lisible par ordinateur.

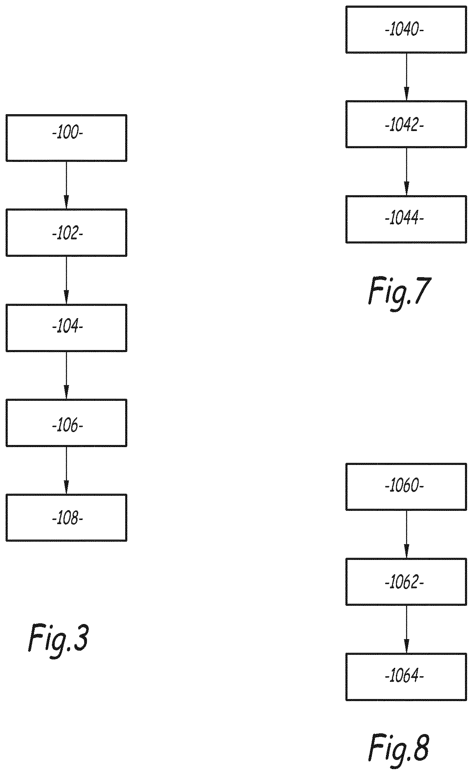

La mémoire 22 contient un logiciel embarqué et/ou des instructions exécutables 40 destinées à être exécutées par l'unité 20 pour assurer le fonctionnement du circuit de commande 8 électronique, et notamment pour piloter l'envoi d'un message radiofréquence et pour mettre en œuvre un procédé de fonctionnement d'un appareil électronique 2 communiquant sans fil, notamment celui décrit en référence à la figure 3.

La mémoire 22 contient également des données 42 et une valeur numérique 44 dont le rôle est décrit plus en détail dans ce qui suit.

Le circuit d'alimentation 24 est notamment adapté pour alimenter électriquement l'émetteur radiofréquence 10 selon un point de fonctionnement particulier. Le circuit d'alimentation 24 est lui-même alimenté par la réserve d'énergie 4. Par exemple, le circuit d'alimentation 24 comporte un convertisseur de puissance, notamment de type continu-continu, et comporte avantageusement un régulateur de tension, tel qu'un régulateur linéaire, électriquement connecté en sortie du convertisseur de puissance. A titre d'exemple illustratif, l'émetteur radiofréquence 10 peut être alimenté avec une tension électrique d'alimentation d'entrée comprise entre 0,9 volts à 3,7 volts.

Par exemple, le convertisseur de puissance du circuit d'alimentation 24 est sélectivement commutable entre plusieurs modes de fonctionnement. A titre d'exemple, le convertisseur de puissance peut fonctionner soit comme un abaisseur de tension (convertisseur « buck » ou « step-down » en langue anglaise), soit comme un élévateur de tension (convertisseur « boost » ou « step-up » en langue anglaise). Le convertisseur peut aussi fonctionner, dans chacun de ces modes de fonctionnement, avec un écart de tension réglable. L'écart de tension désigne ici l'amplitude avec laquelle la tension de sortie est élevée ou, au contraire, abaissée par rapport à la tension d'entrée du convertisseur. La commutation et l'écart de tension sont ici pilotés par l'unité de calcul 20.

L'émetteur 10 est, par exemple, une interface radiofréquence pouvant remplir la fonction de transmetteur radiofréquence, ou d'émetteur-récepteur, bien qu'ici, seule la fonction d'émission est décrite en détail. L'émetteur 10 comporte ici notamment un module d'émission radiofréquence, une antenne radiofréquence et un amplificateur de puissance, non illustrés. L'amplificateur est polarisé par le circuit d'alimentation 24 selon un point de fonctionnement particulier. L'entrée de l'amplificateur de puissance est connectée électriquement à la sortie du module d'émission et la sortie de l'amplificateur de puissance est connectée électriquement à l'antenne. L'amplificateur est configuré pour amplifier le signal de sortie du module d'émission et alimenter l'antenne radiofréquence.

Par exemple, l'émetteur 10 est adapté pour fonctionner suivant un protocole de communication radiofréquence de type LoRa®, ou de type Sigfox®, ou de type Zigbee®, ou de type WiFi, ou de type LTE ou encore de type Bluetooth® Low Energy, ou de tout autre protocole de communication radiofréquence approprié.

Le circuit de commande 8, et plus particulièrement l'unité de calcul 20, est programmée pour optimiser la consommation d'énergie de l'appareil électronique 2 lors de l'émission d'un message radiofréquence par l'émetteur 10 en fonction de la quantité d'énergie disponible dans la réserve d'énergie 4. Le circuit de commande 8 est, par exemple, programmé pour mettre en œuvre le procédé de fonctionnement décrit en référence à la figure 3, afin d'éviter que l'émission du message ne soit tronquée ou interrompue par faute d'énergie suffisante dans la réserve 4.

En pratique, dans cet exemple, la quantité d'énergie consommée par le circuit de commande 8, et notamment par l'émetteur 10, pour émettre un message radiofréquence de longueur Lt est notée « Ec » et est donnée par la formule théorique suivante :

$$E_c = P_s \times L_t = P_r \times \frac{1}{R_{conv}} \times \frac{1}{R_{RF}} \times L_t \qquad (1)$$

Dans cette formule, « Ps » désigne la puissance électrique fournie par la réserve 4 au circuit d'alimentation 24, « Pr » est la puissance rayonnée (également nommée puissance d'émission) par l'antenne de l'émetteur 10, « $R_{conv}$ » est le rendement énergétique du circuit d'alimentation 24, « $R_{RF}$ » est le rendement énergétique de l'amplificateur de l'émetteur 10. Le rendement $R_{RF}$ est défini comme étant le rapport de la puissance Pe fournie en sortie par le circuit d'alimentation 24 à l'amplificateur par la puissance $P_r$ rayonnée par l'antenne. Le rendement $R_{conv}$ est défini comme étant le rapport de la puissance fournie au circuit 24 par la réserve 4 par la puissance Pe fournie en sortie par le circuit 24. La puissance Pe fournie en sortie par le circuit d'alimentation 24 correspond à la puissance consommée par l'émetteur 8 et notamment par l'amplificateur de puissance.

Lorsque le message radiofréquence est formé par la répétition de plusieurs trames identiques et de même longueur L, la quantité Lt dans la formule ci-dessus est remplacée par le produit N x L, où « N » désigne le nombre de trames de longueur L.

La longueur du message ainsi déterminée correspond à la durée pendant laquelle l'émetteur 10 émet le signal radiofréquence correspondant au message et donc la durée pendant laquelle l'émetteur 10 consomme de l'énergie électrique.

On comprend donc que l'énergie consommée peut être modifiée en jouant sur des paramètres de fonctionnement des différents éléments du circuit 8 qui interviennent dans l'envoi du message, et plus particulièrement sur des paramètres de fonctionnement du circuit d'alimentation 24 et de l'émetteur 10. Ces paramètres sont collectivement nommés « paramètres d'émission » dans ce qui suit.

De façon connue, les paramètres d'émission comportent notamment les tensions et courants nécessaires pour polariser l'amplificateur de puissance. Ces paramètres conditionnent notamment la puissance d'émission Pr de l'émetteur 10 lors de l'émission du message radiofréquence. La puissance d'émission Pr dépend notamment du courant électrique d'alimentation et de la tension électrique d'alimentation fournis par le circuit d'alimentation 24 à partir de la réserve d'énergie 4.

Un autre paramètre influençant la consommation d'énergie est la classe de fonctionnement de l'amplificateur de l'émetteur. Par exemple, la classe de fonctionnement de l'amplificateur influe directement sur son rendement énergétique $R_{RF}$. De façon connue, le fonctionnement d'un amplificateur de puissance au sein d'un émetteur radiofréquence peut être caractérisé par une valeur dite d'angle de conduction. Les amplificateurs peuvent ainsi être rangés en plusieurs classes selon la valeur de cet angle de conduction, telle que la classe A, la classe AB, la classe B, la classe C, la classe D ou encore la classe E. A chaque classe correspond une valeur ou un intervalle de valeurs d'angle de conduction. Ces classes sont ordonnées entre elle de telle sorte que la valeur d'angle de conduction correspondante décroît depuis la classe A vers la classe E. Comme énoncé précédemment, le rendement énergétique de l'amplificateur de puissance dépend de sa classe de fonctionnement ; le rendement énergétique $R_{RF}$ croit depuis la classe A vers la classe E.

Le rendement énergétique $R_{conv}$ du circuit d'alimentation 24 dépend des modes de fonctionnement du convertisseur de puissance continu-continu, notamment selon que le convertisseur fonctionne en abaisseur de tension ou en élévateur de tension. Le rendement énergétique $R_{conv}$ du circuit d'alimentation 24 dépend aussi de la valeur de l'écart de tension entre la tension de sortie et la tension d'entrée du convertisseur. Par exemple, le rendement énergétique diminue si l'écart de tension augmente et vice versa. Le rendement $R_{conv}$ est ici compris à l'intérieur d'un intervalle allant de 60% à 95%.

Le nombre N de trames émises dépend de la structure du message radiofréquence. Il est fréquent qu'un message comporte des trames identiques répétées les unes après les autres destinées à être émises en succession. Cette redondance sert à augmenter la probabilité que le contenu informationnel du message soit bien reçu par son destinataire en cas de perte d'une partie du message émis. Dans cet exemple, pour simplifier l'explication, on considère ici que le message ne comporte qu'une seule trame de longueur L.

Dans l'exemple illustré, on considère que les paramètres d'émission susceptibles d'être modifiés lors de l'optimisation comportent tous les paramètres énoncés ci-dessus, bien qu'en pratique on peut ne considérer que certains de ces paramètres d'émission.

De façon générale, l'optimisation de la valeur de l'énergie Ec consiste ici à sélectionner des paramètres d'émission de l'émetteur, et plus précisément à sélectionner un ensemble de valeurs spécifiques de chacun des paramètres d'émission, pour lequel la valeur de l'énergie consommée Ec est abaissée en dessous d'une certaine valeur. En variante, l'optimisation peut aussi consister à minimiser une fonction représentative de l'énergie consommée Ec. Il peut s'agir d'une fonction dépendant de l'énergie Ec donnée par la formule théorique ci-dessus et dépendant également de la température de l'appareil électronique 2.

Par exemple, dans ce qui suit, on distingue, pour les paramètres d'émissions, d'une part la classe d'émission de l'amplificateur et d'autre part le « point de fonctionnement » de l'émetteur 10, le point de fonctionnement correspondant aux tensions et courants nécessaires pour polariser l'amplificateur de puissance de l'émetteur 10.

Un exemple de mise en œuvre du procédé de fonctionnement d'un appareil électronique communiquant sans fil est maintenant décrit en référence à la figure 3. De façon avantageuse, ce procédé permet la gestion dynamique de la puissance d'émission d'un message radiofréquence par un appareil électronique communiquant sans fil.

D'abord, lors d'une étape 100, une trame radiofréquence représentative d'au moins une information destinée à être émise par l'émetteur radiofréquence 10 selon un protocole de communication est acquise par l'unité de calcul 20.

Ensuite, lors d'une étape 102, la quantité d'énergie disponible dans la réserve d'énergie 4 est automatiquement déterminée. La quantité d'énergie disponible dans la réserve d'énergie 4 correspond à la quantité d'énergie délivrable par cette dernière à l'appareil électronique 2 et notamment au circuit de commande 8. L'étape 102 de détermination de la quantité d'énergie disponible est mise en œuvre par le circuit de commande 8, par exemple à l'aide de l'unité de calcul 20 et du dispositif de mesure 26. La détermination de l'énergie disponible peut être effectuée de différentes manières.

Selon un premier mode de mise en œuvre, le circuit 8 détermine, au cours du fonctionnement de l'appareil 2, de façon continue ou à intervalles répétés, la quantité d'énergie fournie par le dispositif 6 de récupération d'énergie à la réserve 4. Le circuit 8 détermine également, de façon continue ou à intervalles répétés, la quantité d'énergie fournie, au cours du temps, par la réserve d'énergie 4 aux différents éléments de l'appareil électronique 2. Pour ce faire, l'appareil électronique 2 peut comprendre un dispositif de mesure électriquement connecté entre le dispositif de récupération d'énergie 6 et la réserve d'énergie 4 adapté pour mesurer l'énergie entrant dans la réserve d'énergie. Il peut s'agir, par exemple, d'un capteur de courant ou d'un capteur de tension.

En d'autres termes, le circuit 8 surveille les quantités d'énergie qui entrent et qui sortent de la réserve 4, de façon à réaliser un bilan énergétique de la réserve d'énergie 4. Ces déterminations sont ici réalisées à l'aide du dispositif de mesure 26, en mesurant au moins une grandeur électrique, de préférence en mesurant la tension aux bornes de la réserve d'énergie 4 et le courant circulant en entrée et en sortie de la réserve d'énergie 4. L'énergie disponible correspondante est ensuite calculée automatiquement, en connaissant des propriétés de la réserve 4, par exemple la résistance équivalente. Le calcul peut être réalisé par l'unité de calcul 20 à l'aide d'un programme stocké dans la mémoire 22. De même, les propriétés de la réserve d'énergie peuvent être stockés dans la mémoire 22.

A partir d'une valeur initiale connue d'énergie disponible à un instant initial dans la réserve 4, on peut ainsi connaître à chaque instant ultérieur quelle est la quantité d'énergie disponible dans la réserve 4. Par exemple, cette quantité d'énergie disponible est enregistrée dans la mémoire 22 en tant que valeur numérique 44. Cette valeur numérique 44 est mise à jour par l'unité de calcul 20 tout au long du fonctionnement de l'appareil 2, soit en continu, soit à des intervalles de temps prédéfinis, soit à chaque fois que la réserve 4 est sollicitée pour être rechargée ou pour débiter de l'énergie.

Ainsi, pour connaître la quantité d'énergie disponible dans la réserve d'énergie, lors de l'étape 122, l'unité 20 lit automatiquement la valeur numérique 44 préalablement enregistrée dans la mémoire 22.

En variante, les quantités d'énergies entrant et sortant de la réserve 4 sont enregistrées séparément dans la mémoire 22 et le calcul de l'énergie disponible dans la réserve d'énergie 4 n'est réalisé que lors de l'étape 102.

Selon un deuxième mode de mise en œuvre de l'étape 102, la détermination de la quantité d'énergie disponible est estimée ou extrapolée en effectuant plusieurs mesures d'une grandeur électrique de la réserve 4 au moyen du dispositif de mesure 26. Un exemple d'une telle méthode est illustré sur la figure 4 et comporte ici des opérations, ou sous-étapes, numérotées 1020 à 1024. Cet exemple est décrit en référence à une tension électrique aux bornes de la réserve d'énergie 4, mais en variante, d'autres grandeurs électriques relatives à la réserve 4 peuvent être utilisées comme le courant.

Ainsi, lors de l'opération 1020, la tension à vide aux bornes de la réserve d'énergie 4 est mesurée, au moyen du dispositif de mesure 26. On obtient ainsi une première valeur de tension.

Par « à vide », il est entendu ici que la mesure de la tension électrique aux bornes de la réserve d'énergie 4 est réalisée alors qu'aucune charge électrique n'est connectée en sortie de la réserve d'énergie 4, c'est-à-dire qu'aucun courant électrique n'est débité par la réserve 4. On obtient ainsi une première valeur de tension. Pour cela, l'appareil électronique 2 peut comprendre un circuit de commutation connecté électriquement à la sortie de la réserve d'énergie 4. Le circuit de commutation est configuré pour commuter la sortie de la réserve d'énergie soit sur la charge, en fonctionnement, soit sur le dispositif de mesure 26 lors d'une mesure à vide. La commutation du circuit de commutation est pilotée par un processeur comme celui de l'unité de calcul 20. En référence à la figure 1, la charge correspond au circuit de commande 8 et au sous ensemble 12.

Ensuite, lors de l'opération 1022 une quantité d'énergie prédéfinie est prélevée dans la réserve 4, par exemple, en débitant une quantité de courant $\delta I$ prédéfinie pendant une durée $\delta t$ prédéfinie. Pour ce faire, comme énoncé précédemment, l'appareil électronique 2 peut comprendre un circuit de commutation connecté électriquement à la sortie de la réserve d'énergie 4. Le circuit de commutation est configuré pour commuter la sortie de la réserve d'énergie 4 sur une charge électrique de caractéristiques prédéterminées pendant la durée $\delta t$, de manière à soustraire la quantité de courant $\delta I$. Il en résulte une chute de tension aux bornes de la réserve d'énergie 4. Une mesure de la tension électrique aux bornes de la réserve 4 est effectuée, par exemple, à l'aide du dispositif de mesure 26, afin d'obtenir une deuxième valeur de tension lié à la décharge de courant. Les valeurs de durée $\delta t$ et de courant $\delta I$ sont préférentiellement choisies en fonction de la technologie de stockage utilisée pour la réserve 4. La valeur de la durée $\delta t$ de prélèvement de courant est choisie la plus courte possible afin d'éviter de prélever une quantité de courant $\delta I$ trop importante et ainsi éviter de trop décharger la réserve d'énergie 4. Le but étant de calculer une pente, la durée $\delta t$ de prélèvement doit être choisie de façon à pouvoir effectuer le calcul. Elle dépend donc également du dispositif de mesure et notamment du quantum du convertisseur analogique-numérique de l'interface d'acquisition 30.

Puis, lors de l'opération 1024, une estimation de l'énergie disponible dans la réserve 4 est réalisée à partir des première et deuxième valeurs de tension électrique mesurées et au moyen d'une formule prédéfinie qui, par exemple, dépend de la nature de la réserve 4. Suivant un mode de mise en œuvre, l'estimation est effectuée par l'unité de calcul 20 à l'aide d'instructions exécutables par exemple stockées dans la mémoire 22.

Ce deuxième mode de mise en œuvre est avantageusement utilisé en présence d'un dispositif 6 de récupération d'énergie fournissant de l'énergie à la réserve 4 sous forme d'impulsion de courte durée, comme cela est notamment le cas des dispositifs de récupération d'énergie à base d'éléments piézoélectriques. En effet, de tels dispositifs 6 de récupération d'énergie, fournissent une tension importante pendant une durée très brève. De ce fait, le premier mode de mise en œuvre ne donne pas toujours des résultats satisfaisants, car il est difficile de mesurer précisément la quantité d'énergie fournie par le dispositif 6 à la réserve 4 lorsque cette quantité d'énergie est fournie sous la forme d'une impulsion de courte durée, par exemple de durée inférieure à $100\mu$s.

Ainsi, à l'issue de l'étape de détermination 102, quel que soit le mode d'estimation utilisé, on dispose d'une valeur représentative de la quantité d'énergie disponible dans la réserve 4. La quantité d'énergie disponible est notée « Er » dans ce qui suit.

Avantageusement, lors de l'étape 102, la quantité d'énergie disponible Er déterminée est automatiquement corrigée en fonction de la valeur de température mesurée par le dispositif 28. En effet, en pratique, les performances du dispositif 6 et/ou de la réserve d'énergie 4 peuvent dépendre de leur température. C'est notamment le cas des éléments piézoélectriques et des condensateurs. Par exemple, lors de l'étape 102 de détermination, une mesure de la température ambiante au sein de l'appareil électronique 2 est effectuée, par le dispositif de mesure de la température 28 et, à l'issue de la détermination de la quantité d'énergie disponible, une correction est effectuée en appliquant un coefficient de correction à la quantité d'énergie Er déterminée. Le coefficient de correction est dépendant de la valeur de la température mesurée. La correction est effectuée à partir d'une loi de correction prédéfinie et/ou d'une table de valeurs précalculée. La loi de correction prédéfinie et/ou la table de valeurs précalculée peuvent être stockée dans la mémoire 22.

Cette correction en fonction de la température est avantageusement applicable aux deux modes de mise en œuvre de l'étape 102 précédemment décrits. Dans le premier mode de mise en œuvre, la correction de température peut être effectuée lors de chacune des mesures au cours du temps et pas seulement au moment d'exécuter l'étape 102.

En variante, aucune correction de température n'est effectuée et le dispositif de mesure 28 peut être omis.

Ensuite, lors d'une étape 104, le circuit de commande 8 détermine automatiquement la longueur du message radiofréquence destiné à être émis, c'est-à-dire qu'il choisit de construire, à partir de la trame radiofréquence acquise, un message radiofréquence plus ou moins long en fonction des circonstances.

Le message radiofréquence comprend au moins la trame radiofréquence acquise au cours de l'étape 100.

Suivant un mode de mise en œuvre, le message radiofréquence ne comprend que la trame radiofréquence acquise.

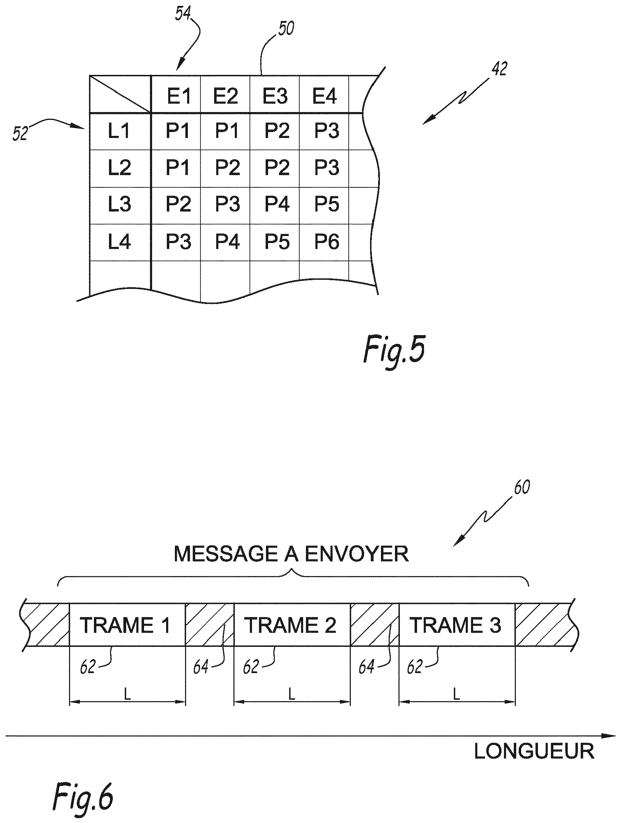

Suivant un mode de mise en œuvre alternatif, le message est composé d'une répétition de la trame acquise dans un but de redondance. Eventuellement, les trames successives peuvent être séparées par une pause de longueur prédéterminée. A titre illustratif, la figure 6 représente un exemple d'un message radiofréquence 60 formé de trois trames radiofréquence 62 identiques présentant chacune une même longueur L, les trois trames 62 successives étant espacées les unes des autres par une pause 64 d'une longueur Lp prédéterminée.

En référence à la figure 7, l'étape 104 de détermination de la longueur du message radiofréquence destiné à être émis peut comprendre plusieurs sous étapes référencés 1040 à 1044.

Lors d'une sous-étape 1040, le circuit de commande 8 et notamment l'unité de calcul 20 commence par déterminer la longueur L de la trame radiofréquence acquise au cours de l'étape 100.

L'étape 104 comprend une sous-étape 1042 pendant laquelle l'unité de calcul 20 compose le message radiofréquence destiné à être émis par l'émetteur 10.

La composition du message radiofréquence, à savoir le nombre de répétition de la trame 60 radiofréquence acquise dans le message peut dépendre d'un critère prédéterminé relatif à l'utilisation de l'appareil électronique 2, notamment relatif à la portée théorique du message radiofréquence 60.

Par exemple, lorsque l'appareil électronique 2 est destiné à émettre un message 60 avec une courte portée, il est préférable de privilégier le nombre de trames par rapport à la puissance rayonnée. Le message comprend donc un nombre de trames 62 élevé. Cela a pour conséquence, pour une quantité d'énergie disponible donnée, de réduire la puissance d'émission (également nommée puissance rayonnée) de l'émetteur par rapport au cas où le message 60 ne comprend qu'une seule trame 62. Par "courte portée" on entend une portée inférieure à environ 5m. Dans le cas d'une application dans le domaine de la domotique, cela pourrait correspondre à une portée de l'ordre d'une pièce d'un bâtiment. Ce cas de figure peut, par exemple, correspondre à un point de commande configuré pour transmettre des instructions à un actionneur, comme un dispositif d'occultation ou un dispositif d'éclairage situé à proximité du point de commande, dans la même pièce.

Dans le cas d'une communication radiofréquence à courte portée, les causes de non réception des messages 60 par leur destinataire sont principalement dues à des interférences ponctuelles. Il est donc préférable de répéter les trames 62 afin que, en cas d'occurrence de telles interférences ponctuelles, au moins une trame 62 complète ait malgré tout de bonnes chances d'être reçue par le destinataire. Abaisser la valeur de la puissance d'émission est, dans ce cas précis, moins préjudiciable, dans la mesure où le destinataire n'est pas trop éloigné.

On considère à présent le cas d'une communication à longue portée. Par « longue portée » on entend une portée supérieure à 5m, typiquement, une portée jusqu'à environ 20m voire 30m. Dans le cadre d'une application au domaine de la domotique, cela représenterait une portée permettant d'englober toutes les pièces d'une maison, voire une portée s'étendant jusqu'au portail ou jusqu'à la clôture extérieure de la maison. Dans le cas d'une communication radiofréquence à longue portée, les causes de non réception du message radiofréquence 60 par le récepteur destinataire sont surtout dues à un manque de puissance rayonnée. Il est donc préférable de privilégier la puissance d'émission au détriment du nombre de de trames répétées. L'unité de calcul 20 préfère donc concentrer le maximum de puissance sur un nombre de trames réduit plutôt que d'émettre un nombre de trames 62 élevé avec une puissance insuffisante. Cela aurait pour conséquence de décharger la réserve d'énergie 4 plus rapidement sans pour autant garantir que le destinataire recevra correctement le message 60.

En d'autres termes, dans ce cas de figure, l'unité de calcul 20 compose un message 60 ne comprenant qu'une seule trame 62. Eventuellement le message peut comprendre deux trames 62.

Bien entendu, d'autres cas de figure intermédiaires entre ces deux extrêmes sont envisageables.

Suivant un mode de réalisation, l'appareil électronique 2 est configuré, lors de sa fabrication, pour émettre selon une portée courte ou une longue portée. L'unité de calcul 20 est donc programmée pour privilégier le nombre de trame sur la puissance ou inversement selon le cas de figure. En pratique, le programme adéquat, exécutable par l'unité de calcul 20, est stocké dans la mémoire 22 suivant le cas de figure.

Suivant un mode de réalisation alternatif, l'appareil électronique peut être " générique » et pouvoir soit émettre à courte portée soit à longue portée. Pour cela, l'appareil peut comprendre un commutateur programmé pour configurer le type d'émission de l'unité de commande 8 et notamment de l'émetteur 10, soit selon une portée courte soit selon une portée longue.

Suivant un autre mode de réalisation, l'appareil électronique 2 peut comprendre une ergonomie particulière pour commuter l'émission sur une portée courte ou une portée longue. L'ergonomie particulière peut correspondre, par exemple, à une action particulière sur un ou plusieurs éléments de sélections.

L'étape 104 comprend une sous-étape 1044 pendant laquelle l'unité de calcul 20 détermine la longueur du message radiofréquence 60. La longueur Lt du message destiné à être émis peut être déduite par multiplication de la longueur de la trame acquise par le nombre de répétition de la trame.

Ensuite, lors d'une étape 106, l'unité 20 choisit les paramètres d'émission de l'émetteur radiofréquence 10. Les paramètres d'émission comprennent essentiellement le point de fonctionnement de l'émetteur 10 et la classe de fonctionnement de l'amplificateur de puissance. Les paramètres d'émission sont déterminés de sorte que la quantité théorique d'énergie Ec qui sera consommée par le circuit de commande 8 lors de l'émission du message soit inférieure à la quantité déterminée d'énergie Er disponible dans la réserve 4. Lorsque cela est possible, l'unité 20 détermine des paramètres d'émission afin de minimiser la quantité d'énergie qui sera consommée lors de l'émission du message.

L'unité de calcul 20 détermine la classe de fonctionnement de l'amplificateur en fonction de son architecture et de la puissance rayonnée souhaitée. La classe de fonctionnement est déterminée afin d'éviter les problèmes de distorsion des signaux radiofréquences.

A titre d'exemple, l'unité de calcul 20 ne peut pas utiliser systématiquement les classes D à B, bien que présentant de bons rendements, car dans ce cas la distorsion des signaux entraine une non-conformité normative radiofréquence à cause d'harmoniques trop élevés. En fonction de la puissance rayonnée, l'unité de calcul 20 choisit la classe de fonctionnement la plus appropriée pour que les harmoniques restent inférieures au seuil imposé par les normes radiofréquence. Par exemple, à forte puissance, l'unité de calcul 20 se rapprochera de la classe A ou AB, alors que à faible puissance, les harmoniques engendrés étant plus faibles, une classe de fonctionnement B, C, D voire E pourra convenir.

Suivant un autre mode de mise en œuvre, la détermination de la classe de fonctionnement de l'émetteur peut être effectuée en fonction de la puissance rayonnée à l'aide d'un tableau de correspondance entre la puissance rayonnée et la classe de fonctionnement à utiliser comme décrit plus en détail ci-après.

Le point de fonctionnement de l'émetteur est ensuite déterminé en fonction de la classe de fonctionnement déterminée. Selon une particularité de l'invention, le point de fonctionnement de l'émetteur n'est pas déterminé de sorte à optimiser le fonctionnement de l'amplificateur mais de sorte à optimiser l'utilisation de l'énergie disponible pour émettre un message radiofréquence selon les conditions souhaitées.

Selon un mode de mise en œuvre préféré, le point de fonctionnement est sélectionné par l'unité 20 parmi un ensemble de points de fonctionnement prédéfinis, ici stockés dans la mémoire 22. Par exemple, les données 42 stockées dans la mémoire comportent un tel ensemble de points de fonctionnement prédéfinis, parmi lesquels l'unité 20 peut choisir un point de fonctionnement particulier, en fonction des valeurs de la quantité d'énergie disponible Er et de la longueur L du message destiné à être émis déterminées au cours des étapes précédentes.

Par exemple, l'ensemble 42 définit des règles de correspondance qui mettent en relation les points de fonctionnement prédéfinis avec, d'une part, des valeurs ou des intervalles de valeurs de longueurs de messages et, d'autre part, avec des valeurs ou des intervalles de valeurs de quantité d'énergie disponible dans la réserve d'énergie 4. En d'autres termes, pour sélectionner un point de fonctionnement particulier, l'unité 20 identifie, dans l'ensemble 42, le point de fonctionnement prédéfini qui correspond à la valeur de la quantité Er d'énergie disponible déterminée lors de l'étape 102 et correspondant également à la longueur L du message déterminée à l'issue de l'étape 104.

Cet ensemble 42 de points de fonctionnement prédéfinis est, par exemple, calculé préalablement par le fabricant de l'appareil électronique 2 puis enregistré en usine dans la mémoire 22 lors de sa fabrication. Ces points de fonctionnement prédéfinis sont de préférence calculés en fonction des caractéristiques des différents constituants du circuit 8, tels que la technologie utilisée pour le dispositif 6 de récupération d'énergie, la technologie de stockage utilisée pour la réserve 4, voire aussi des propriétés du circuit d'alimentation 24 et de l'émetteur 10.

Grâce à l'ensemble 42 de points de fonctionnement prédéfinis, l'unité de calcul 20 n'a pas besoin de mettre en œuvre des calculs d'optimisation ou de minimisation de la quantité théorique d'énergie consommée Ec, ce qui est avantageux car de tels calculs nécessitent des ressources informatiques importantes et peuvent nécessiter un temps de calcul assez long. La sélection d'un point de fonctionnement particulier parmi l'ensemble 42 de points de fonctionnement prédéfinis requiert moins de ressources de calcul et moins de temps de calcul qu'un calcul complet d'optimisation réalisé « à la volée » et en temps réel.

La figure 5 représente un exemple illustratif d'un tel ensemble 42 de points de fonctionnement prédéfinis. Cet ensemble 42 est ici une table 50 ou matrice à deux dimensions. Toutefois, en variante, d'autres structures de données peuvent être utilisées, comme une base de données.

La table 50 comporte des lignes 52 et des colonnes 54. Les références E1, E2, E3, et E4 indexent les colonnes 54 et correspondent à des intervalles de valeurs que peut prendre la valeur d'énergie disponible Er estimée lors de l'étape 102. Les références L1, L2, L3 et L4 indexent les lignes 52 et désignent des intervalles de longueurs de message. Les références P1, P2, P3, P4, P5 et P6 désignent des points de fonctionnement prédéfinis associés aux intersections de lignes et de colonnes. Ainsi, un point de fonctionnement est ici associé à chaque couple d'intervalle de valeurs d'énergie disponible et d'intervalle de longueurs de message.

Par exemple, chaque point de fonctionnement P1, P2, P3, P4, P5 et P6 stocké dans la table 50 est une liste de valeurs des différents paramètres de fonctionnement considérés. En variante, chaque point de fonctionnement P1, P2, P3, P4, P5 et P6 contenu dans la table 50 est un pointeur qui désigne une zone de la mémoire 22 dans laquelle sont stockés les valeurs des différents paramètres de fonctionnement considérés, sous la forme d'une liste ou de tout autre structure numérique de données appropriée.

Les lignes 52 et les colonnes 54 sont ici indexées par des intervalles de valeurs mais, en variante, elles peuvent être indexées par des valeurs discrètes, ou par toute combinaison appropriée de valeurs discrètes et d'intervalles.

Dans cet exemple, pour sélectionner un point de fonctionnement particulier, l'unité de calcul 20 recherche automatiquement l'intervalle E1, E2, E3 ou E4 correspondant à la valeur Er de d'énergie disponible estimée, et recherche l'intervalle L1, L2, L3 et L4 correspondant à la longueur du message estimée. Le point de fonctionnement particulier sélectionné est celui qui est associé aux deux intervalles ainsi identifiés. Par exemple, si la valeur d'énergie disponible Er appartient à l'intervalle E2 et que la valeur de la longueur L appartient à l'intervalle L3, alors le point de fonctionnement particulier correspondant est le point P3. Le point de fonctionnement particulier correspond notamment aux tensions et courants à appliquer à l'émetteur radiofréquence 10, et notamment à l'amplificateur de puissance, pour permettre l'émission, avec le maximum de puissance, d'un message radiofréquence ayant la longueur estimée compte tenu de la quantité d'énergie disponible estimée.

Selon un mode de mise en œuvre, l'étape 106 de détermination des paramètres d'émission peut comprendre une sous étape d'optimisation du choix de la classe de fonctionnement et du point de fonctionnement de l'émetteur. L'optimisation peut être effectuée par l'unité de calcul à l'aide d'un programme exécutable adapté stocké dans la mémoire 22.

Selon d'autres modes de mise en œuvre, le point de fonctionnement particulier est déterminé par l'unité de calcul 20 en effectuant un calcul de minimisation de la quantité théorique d'énergie consommée Ec précédemment définie, sans avoir recours à l'ensemble 42. L'ensemble 42 peut alors être omis.

Par exemple, l'unité 20 est programmée pour mettre en œuvre des opérations de calcul de minimisation d'une fonction à une ou plusieurs variables, par exemple à l'aide d'un modèle numérique de résolution ou d'optimisation stocké dans la mémoire 22. Pour déterminer des paramètres d'émission adéquats, notamment pour sélectionner un point de fonctionnement adéquat, les valeurs des paramètres d'émission sont optimisées jusqu'à trouver une combinaison pour laquelle la valeur théorique d'énergie consommée Ec est inférieure à la valeur d'énergie disponible Er, voire la combinaison pour laquelle la valeur Ec est la plus petite possible. En d'autres termes, l'unité 20 calcule l'ensemble de paramètres d'émission qui permettent d'obtenir une quantité d'énergie consommée qui soit inférieure à la quantité d'énergie disponible Er estimée.

De façon avantageuse, le calcul d'optimisation est mis en œuvre en utilisant des contraintes définies en fonction de la technologie utilisée pour le dispositif 6 de récupération d'énergie et/ou de la technologie de stockage d'énergie utilisée pour la réserve d'énergie 4. Ces contraintes permettent de restreindre les valeurs que peuvent prendre certains des paramètres d'émission, ce qui permet de simplifier le calcul d'optimisation. Ces contraintes sont par exemple prédéfinies par le fabricant de l'appareil électronique 2 et sont avantageusement enregistrées dans la mémoire 22.

A titre d'exemple, ces contraintes sont résumées dans le tableau ci-dessous lorsque la réserve 4 comporte des condensateurs ou des supercondensateurs.

| Technologie de récupération d'énergie | Paramètre optimisé | Convertisseur de puissance | Classe amplificateur |
|---|---|---|---|
| Elément piézoélectrique | Courant | Abaisseur avec écart de tension fort | Classe B voire C |
| Module photovoltaïque à cellules en série | Courant | Abaisseur avec écart de tension fort | Classe AB ou B |
| Module photovoltaïque à cellules en parallèle | Tension | Elévateur avec écart de tension faible | Classe AB ou B voire C |
| Collecte d'ondes RF | Tension | Elévateur avec écart de tension moyen à fort | Classe AB ou B voire C |

Le tableau indique, pour chaque technologie de récupération d'énergie utilisée pour recharger la réserve 4 (première colonne en partant de la gauche), les valeurs que doivent prendre les paramètres relatifs au mode de fonctionnement du convertisseur de puissance (troisième colonne), les valeurs que peuvent prendre les paramètres relatifs à l'amplificateur de l'émetteur 10 et notamment sa classe de fonctionnement (dernière colonne) et le paramètre courant ou tension d'alimentation qui peut varier pour optimiser la valeur de puissance Pe consommée par l'émetteur 10 (deuxième colonne), étant entendu que l'autre paramètre tension ou courant présente une valeur qui est imposée par la technologie utilisée pour le dispositif 6 en conjonction avec la réserve 4. A titre illustratif, dans ce tableau les paramètres " écart de tension faible ", "écart de tension fort" et "écart de tension moyen " font respectivement référence à un écart de tension inférieur à environ 1V, un écart de tension supérieur à environ 3V et un écart de tension compris entre ces deux valeurs.

Avantageusement, l'optimisation est réalisée en tenant compte de la valeur de la température mesurée par le dispositif de mesure 28. Toutefois, cela n'est pas indispensable et peut être omis lorsque le dispositif de mesure 28 est lui-même omis.

Ainsi, à la fin de l'étape 106, l'unité de calcul 20 dispose de valeurs des paramètres d'émission de l'émetteur radiofréquence garantissent une émission de la totalité du message radiofréquence avec l'énergie disponible dans la réserve d'énergie 4.

Puis, lors d'une étape 108, le message est émis par l'émetteur 10 en utilisant les valeurs des paramètres d'émission de l'émetteur radiofréquence déterminées précédemment.

Par exemple, en référence à la figure 2, l'unité 20 transmet à l'émetteur 10, par la liaison 32, le message prêt à être émis. L'unité de calcul 20 et notamment son microcontrôleur, pilote le circuit d'alimentation 24, ici par la liaison 34, afin qu'il fournisse à l'émetteur 10, et notamment l'amplificateur de puissance, les tensions et courants nécessaires à la polarisation de l'amplificateur autour du point de fonctionnement déterminé. Ainsi alimenté, l'émetteur consomme une puissance Pe dont la valeur est définie par le point de fonctionnement déterminé. L'unité 20 peut également piloter le circuit d'alimentation 24 afin que le convertisseur de puissance et /ou le régulateur de tension fonctionne dans le mode de fonctionnement et avec l'écart de tension définis par le point de fonctionnement déterminé. L'unité 20 pilote également l'émetteur 10 pour que l'amplificateur fonctionne avec l'angle de conduction, et donc avec la classe de fonctionnement déterminée.

Ainsi, préalablement à l'émission de chaque message radiofréquence, les paramètres d'émission de l'émetteur radiofréquence sont automatiquement adaptés en fonction de l'énergie disponible dans la réserve d'énergie au moment d'émettre le message.

Ainsi, du fait qu'au cours du temps la longueur du message destiné à être transmis peut varier et que la quantité d'énergie disponible n'est jamais identique, chaque message est émis avec des paramètres d'émission différents.

On comprend donc que l'invention permet d'éviter que l'émission du message soit tronquée ou interrompue parce qu'il ne resterait pas suffisamment d'énergie disponible dans la réserve 4.

De plus, l'invention est relativement simple à implémenter, notamment en termes de robustesse, de facilité de fabrication à l'échelle industrielle et de coût de revient. En effet, compte tenu des contraintes de compacité et de miniaturisation, de faible consommation d'énergie, et de coût unitaire qui pèsent sur l'appareil 2, il n'est pas toujours possible d'équiper la réserve 4 d'un dispositif de régulation et de surveillance du type « battery management system » tel qu'on en trouve sur les ensembles de batteries de certaines technologies, car de tels dispositifs de surveillance sont trop complexes et trop coûteux au vu de l'application qui sera faite de l'appareil 2.

Un premier exemple avantageux de mise en œuvre des étapes de détermination 104 de la longueur du message 60 radiofréquence et de détermination 106 des paramètres d'émission est décrit dans le cas d'une émission de longue portée.

L'unité de calcul détermine au cours d'une sous-étape 1040 la longueur de la trame radiofréquence 60 acquise puis, au cours d'une sous étape 1042, compose un message radiofréquence 60 ne comportant qu'une seule trame radiofréquence 62. Dans ce cas de figure la longueur $L_T$ du message est égal à la longueur L de la trame radiofréquence 62.

Ensuite, au cours de l'étape 106 l'unité de commande 8 et notamment l'unité intervalle 20 détermine les paramètres d'émission de l'émetteur radiofréquence 10.

L'émission étant de longue portée, la puissance est privilégiée par rapport au nombre de trame. L'unité de calcul 20 choisit donc une classe de fonctionnement parmi les classes A ou AB en fonction par exemple du type dispositif de rechargement 6.

Une fois la classe de fonctionnement déterminée, l'unité de calcul recherche dans la mémoire 22 la table 50 comprenant l'ensemble 42 de points de fonctionnement prédéfinis. En fonction de la quantité d'énergie disponible et de la longueur $L_T$ du message 60 destiné à être émis, l'unité de calcul sélectionne le point de fonctionnement à appliquer comme décrit précédemment.

Si aucun point de fonctionnement satisfaisant les deux critères d'énergie disponible et de longueur de message, l'unité de calcul ne peut pas sélectionner de point de fonctionnement et ne peut donc pas configurer le circuit d'alimentation. De ce fait, aucun message radiofréquence 60 n'est émis.

Suivant un mode de mise en œuvre, lorsqu'aucun message 60 n'est émis, l'unité de calcul commande l'émission d'un signal d'alerte à destination de l'utilisateur. Le signal d'alerte est un signal quelconque, dans la mesure où il est perçu par l'utilisateur et permet à l'utilisateur de comprendre qu'aucun message radiofréquence 60 ne peut être émis pour cause d'énergie électrique disponible insuffisante dans la réserve d'énergie 4. Le signal peut, par exemple, être un signal émis par un élément interne à l'appareil électronique 2. Le signal d'alerte peut être un signal lumineux, par exemple, le clignotement ou l'éclairage pendant un temps prédéterminé d'une source lumineuse, comme une diode électroluminescente ou un voyant lumineux, situé sur l'appareil électrique. Il peut également s'agir d'un signal sonore émis par un dispositif sonore basse consommation comme un dispositif sonore piézoélectrique.

Un deuxième exemple des étapes de détermination 104 de la longueur du message 60 radiofréquence et de détermination 106 des paramètres d'émission est maintenant décrit dans le cas d'une émission de courte portée.

L'unité de calcul détermine au cours d'une sous-étape 1040 la longueur de la trame radiofréquence 60 acquise.

Dans cet exemple la portée étant courte, le message radiofréquence 60 devra comporter plusieurs trames 62 successives. Suivant un premier mode de mise en œuvre, dans le cas d'une émission longue portée, le message radiofréquence comprend un nombre prédéterminé $N_{max}$ de trames radiofréquences. A titre d'exemple, $N_{max}$ égal 3 ou 5.

Au cours de la sous-étape 1042 l'unité de calcul compose donc un message 60 comprenant $N_{max}$ trames 62 successives, et éventuellement $N_{max}$-1 pauses 64 chacune séparant deux trames consécutives, puis détermine la longueur du message 60.

Au cours de l'étape 106 l'unité de calcul 20 détermine les paramètres d'émission de l'émetteur radiofréquence 10.

L'émission étant de courte portée, le nombre de trames est privilégié par rapport à la puissance d'émission. La puissance étant faible, l'unité de calcul 20 choisit donc une classe de fonctionnement parmi les classes ayant un rendement important comme les classes C à D par exemple en fonction du type dispositif de rechargement 6 présent dans l'appareil électronique 2.

Une fois la classe de fonctionnement déterminée, l'unité de calcul appelle la table 50 comprenant l'ensemble 42 de points de fonctionnement prédéfinis stockée dans la mémoire 22.

L'unité de calcul 20 parcourt ensuite ladite table 50 afin de rechercher si un point de fonctionnement correspondant à l'énergie disponible dans la réserve d'énergie et à la longueur du message radiofréquence 60 à émettre existe. Si l'unité de calcul trouve un tel point de fonctionnement, elle le sélectionne et configure le circuit d'alimentation pour polariser l'amplificateur selon ce point de fonctionnement. Si l'unité de calcul ne trouve aucun point correspondant à l'énergie disponible et à la longueur de message déterminée, elle décrémente d'une unité le nombre de trames $N_{max}$ contenu dans le message 60.

Si la valeur de $N_{max}$ est supérieure ou égale 1 l'unité de calcul 20 recherche de nouveau dans la table 50 si un point de fonctionnement correspondant à l'énergie disponible et à la longueur de message déterminée existe. L'unité de calcul 20 réitère cette opération jusqu'à trouver un point de fonctionnement satisfaisant les deux critères d'énergie disponible et de longueur de message.

Comme énoncé précédemment si un point de fonctionnement de la table 50 correspond à la quantité d'énergie disponible et la longueur de message considérées, l'unité de calcul 20 le sélectionne et configure le circuit d'alimentation pour polariser l'amplificateur selon ce point de fonctionnement. Sinon aucun message n'est émis.

Suivant un mode de mise en œuvre, lorsqu'aucun point de fonctionnement n'a été trouvé dans la table et donc lorsqu'aucun message radiofréquence 60 n'a été émis, l'unité de calcul 20 commande l'émission d'un signal d'alerte à destination de l'utilisateur.

Un autre mode de mise en œuvre du procédé de fonctionnement est à présent décrit.

Lors d'une étape 100, l'unité de calcul 20 acquiert une trame radiofréquence représentative d'au moins une information destinée à être émise par l'émetteur radiofréquence 10 selon un protocole de communication. Suivant un mode de mise en œuvre, la trame radiofréquence peut être transmise par le sous-ensemble de l'appareil 2 à travers une liaison d'échange de données

Ensuite, au cours d'une étape 104, le circuit de commande 8, et notamment l'unité de calcul 20, détermine automatiquement la longueur du message radiofréquence à émettre.

L'étape 104 de détermination de la longueur du message radiofréquence peut comprendre des sous-étapes 1040 à 1044 analogues à celles précédemment décrites.

Au cours d'une sous étape 1040, l'unité de calcul détermine la longueur L de la trame acquise.

Ensuite, lors d'une sous étape 1042, l'unité de calcul 20 compose le message radiofréquence destiné à être émis par l'émetteur 10. Comme énoncé dans le mode de mise en œuvre précédemment décrit, la composition du message dépend de la portée d'émission désirée. Lorsque le message est destiné à être émis avec une portée longue, le message radiofréquence comprend seulement la trame radiofréquence acquise. Lorsque le message est destiné à être transmis avec une portée courte, le message radiofréquence comprend un nombre prédéterminé $N_{max}$ de fois la trame radiofréquences acquise, Nmax étant un entier non nul. Eventuellement, chaque trame successive est séparée par une pause de longueur prédéterminée. A titre d'exemple, Nmax peut être égal à 3.

Enfin, au cours d'une sous-étape 1044, l'unité de calcul 20 détermine la longueur Lt du message radiofréquence 60. La longueur Lt du message destiné à être émis peut être déduite par multiplication de la longueur L de la trame acquise.

Au cours d'une étape 102, l'unité de calcul détermine la quantité d'énergie disponible dans la réserve d'énergie. La détermination 102 de la quantité d'énergie disponible peut être réalisée comme décrit précédemment

Selon un autre mode de mise en œuvre, la détermination 102 de la quantité d'énergie peut être effectuée à l'aide d'un programme exécutable par l'unité de calcul enregistré dans la mémoire 22. Le programme peut par exemple mettre en œuvre la formule mathématique suivante :

$$Er=((V_0-ESR*Ic)-Vmin)*Ic*Lt \qquad (2)$$

Dans laquelle : Er représente la quantité d'énergie disponible ;

$V_0$ représente la tension à vide de la réserve d'énergie ;
ESR représente la résistance série équivalente de la réserve d'énergie ;
Ic représente le courant de mesure ;
Vmin représente la tension minimale de fonctionnement de l'émetteur en émission, c'est-à-dire la tension minimale permettant de faire fonctionner l'émetteur ;
Lt représente la longueur du message radiofréquence émis ;

La valeur de la résistance série équivalente, également nommée résistance interne, de la réserve d'énergie 4 peut être stockée dans la mémoire 22 et appelée par l'unité de calcul. Afin de tenir compte du vieillissement de la réserve d'énergie 4 et donc de l'évolution de la valeur de la résistance série équivalente, la valeur de la résistance série équivalent peut être recalculée périodiquement afin de mettre à jour la valeur enregistrée dans la mémoire 22.

A cet effet, l'appareil électronique 2 peut comprendre un circuit de commutation connecté électriquement à la sortie de la réserve d'énergie 4 et configuré pour commuter la sortie de la réserve d'énergie soit sur l'unité de commande soit sur un circuit de mesure. Le circuit de commutation peut être connecté au microcontrôleur de l'unité de calcul afin de piloter la commutation et réaliser l'acquisition de la résistance série équivalente de la réserve d'énergie de façon périodique. La période de la mise à jour de la résistance série équivalente est par exemple de 1 mois ou 2 mois.

Afin de déterminer le courant de mesure Ic, le circuit de commutation peut être également configuré pour commuter la sortie de la réserve d'énergie 4 sur un capteur de courant. A titre illustratif, le capteur de courant peut être une résistance de mesure (ou « shunt » en langue anglaise) connectée à la masse. Un dispositif de mesure est connecté en parallèle aux bornes de la résistance de mesure et est configuré pour délivrer une tension proportionnelle à la valeur du courant traversant la résistance de mesure.

Cette méthode de détermination basée sur la connaissance de la résistance série équivalente peut être utilisée de façon générale lors de l'étape 102, indépendamment du mode particulier de mise en œuvre du procédé de fonctionnement ici décrit.

Ensuite, lors d'une étape 106, l'unité 20 détermine les paramètres d'émission de l'émetteur radiofréquence 10. L'étape de détermination 106 des paramètres d'émission de l'émetteur radiofréquence 10 peut comprendre des sous-étapes 1060 à 1064, comme illustré sur la figure 8.

Au cours d'une sous-étape 1060, l'unité de calcul détermine l'énergie nécessaire pour que l'émetteur radiofréquence transmette un message radiofréquence ayant la longueur Lt déterminée avec une énergie rayonnée prédéterminée.

Selon un premier mode de mise en œuvre, l'unité de calcul considère une valeur d'énergie rayonnée Emax prédéterminée, par exemple, en lisant la valeur correspondante Emax dans la mémoire 22. A partir de la valeur de l'énergie rayonnée, l'unité de calcul 20 détermine l'énergie nécessaire à l'émetteur 10 pour rayonner une telle énergie. Pour cela, l'unité de calcul peut utiliser un programme exécutable stocké dans la mémoire 22.

Le programme peut par exemple mettre en œuvre la formule mathématique théorique (1) définie précédemment.

L'unité de calcul 20 compare ensuite l'énergie nécessaire déterminée à la quantité d'énergie disponible. Si la quantité d'énergie disponible est strictement supérieure à l'énergie nécessaire, l'unité de calcul sélectionne la valeur de d'énergie rayonnée. L'unité de calcul peut, par exemple enregistrer la valeur sélectionnée dans la mémoire 22. Si la quantité d'énergie disponible est inférieure à l'énergie nécessaire, l'unité de calcul décrémente la valeur de la puissance rayonnée d'une quantité prédéterminée Qe puis réitère les calculs jusqu'à trouver une valeur de puissance rayonnée strictement inférieure à la quantité d'énergie disponible.

Suivant un deuxième mode de mise en œuvre alternatif, l'unité de calcul 20 peut remplir un tableau de valeurs. Une première colonne de ce tableau de valeurs correspond aux valeurs prise par l'énergie rayonnée entre deux valeurs extrêmes, par exemple depuis une valeur maximale Emax jusqu'à une valeur minimale Emin avec un décrément égale à une quantité prédéterminée Qe. Les valeurs d'énergie extrêmes Emax et Emin, ainsi qu'éventuellement la valeur de l'incrément, peuvent être enregistrée dans la mémoire 22. Une deuxième colonne de ce tableau de valeurs correspond aux valeurs prises par l'énergie nécessaire. Pour chaque ligne, l'unité de calcul détermine l'énergie nécessaire à l'émetteur radiofréquence 10 pour émettre un message radiofréquence ayant la longueur Lt déterminée avec la valeur d'énergie rayonnée de la même ligne. L'unité de calcul parcourt ensuite la deuxième colonne afin de trouver la valeur d'énergie nécessaire maximale strictement inférieure à la quantité d'énergie disponible dans la réserve d'énergie. Une fois la valeur d'énergie nécessaire trouvée, l'unité de calcul sélectionne la valeur d'énergie rayonnée correspondante. L'unité de calcul peut, par exemple enregistrer la valeur sélectionnée dans la mémoire 22.

A titre illustratif, les valeurs d'énergie maximale Emax et minimale Emin peuvent être respectivement égales à 25 mW et 1mW. La quantité prédéterminée Qe peut par exemple valoir 1mW. Suivant un autre exemple, Emax=15dBm, Emin=0dBm et Qe=1dB.

Une fois la puissance rayonnée sélectionnée, l'unité de calcul détermine la classe de fonctionnement de l'émetteur radiofréquence 10 et notamment de l'amplificateur de puissance lors d'une sous étape 1062.

Suivant un mode de mise en œuvre, un tableau de valeurs est enregistré dans la mémoire 22. Le tableau comprend, dans une première colonne, des plages de valeurs précalculées de puissance rayonnée et une deuxième colonne comprenant une liste de classe de fonctionnement, par exemple de la classe A à la classe E. A chaque plage de valeurs de puissance rayonnée correspond une classe de fonctionnement. Le tableau de valeurs met ainsi en relation une puissance rayonnée et une classe de fonctionnement de l'émetteur 10. Au cours de la sous-étape 1062, l'unité de calcul appelle le tableau de valeur mettant en relation les valeurs de puissance rayonnée et les classe de fonctionnement. L'unité de calcul 20 parcours ensuite les plages de valeurs de la colonne correspondant à la puissance rayonnée afin de trouver dans quelle plage de valeur se situe la valeur de puissance rayonnée sélectionnée. L'unité de calcul détermine ensuite la classe de fonctionnement de l'émetteur par lecture de la classe de fonctionnement correspondant à l'intervalle trouvé.

Enfin, au cours d'une sous-étape 1064, l'unité de calcul détermine le point de fonctionnement de l'émetteur 10 comme énoncé précédemment. De façon préférentielle, la détermination 1064 du point de fonctionnement est effectuée à partir d'une table 50 comprenant un ensemble 42 de points de fonctionnement prédéfinis, par exemple, stockée dans la mémoire 22.

Le procédé de fonctionnement comprend ensuite une étape 108 d'émission du message radiofréquence 60 avec les paramètres d'émission de l'émetteur radiofréquence 10 déterminés.

Bien que l'invention ait été décrite en relation avec un appareil électronique 2 alimenté par une réserve d'énergie rechargeable, d'autres modes de réalisation et d'autres modes de mise en œuvre sont envisageables avec un appareil électronique alimenté par une réserve d'énergie non-rechargeable, comme une ou plusieurs piles. A cet effet, l'appareil électronique 2 peut comprendre un compteur d'énergie.

Les modes de réalisation, les modes de mise en œuvre et les variantes envisagés ci-dessus peuvent être combinés entre eux pour générer de nouveaux modes de réalisation. valeurs de puissance rayonnée correspond une classe de fonctionnement. Le tableau de valeurs met ainsi en relation une puissance rayonnée et une classe de fonctionnement de l'émetteur 10. Au cours de la sous-étape 1062, l'unité de calcul appelle le tableau de valeur mettant en relation les valeurs de puissance rayonnée et les classe de fonctionnement. L'unité de calcul 20 parcours ensuite les plages de valeurs de la colonne correspondant à la puissance rayonnée afin de trouver dans quelle plage de valeur se situe la valeur de puissance rayonnée sélectionnée. L'unité de calcul détermine ensuite la classe de fonctionnement de l'émetteur par lecture de la classe de fonctionnement correspondant à l'intervalle trouvé.

Enfin, au cours d'une sous-étape 1064, l'unité de calcul détermine le point de fonctionnement de l'émetteur 10 comme énoncé précédemment. De façon préférentielle, la détermination 1064 du point de fonctionnement est effectuée à partir d'une table 50 comprenant un ensemble 42 de points de fonctionnement prédéfinis, par exemple, stockée dans la mémoire 22.

Le procédé de fonctionnement comprend ensuite une étape 108 d'émission du message radiofréquence 60 avec les paramètres d'émission de l'émetteur radiofréquence 10 déterminés.

Bien que l'invention ait été décrite en relation avec un appareil électronique 2 alimenté par une réserve d'énergie rechargeable, d'autres modes de réalisation et d'autres modes de mise en œuvre sont envisageables avec un appareil électronique alimenté par une réserve d'énergie non-rechargeable, comme une ou plusieurs piles. A cet effet, l'appareil électronique 2 peut comprendre un compteur d'énergie.

Les modes de réalisation, les modes de mise en œuvre et les variantes envisagés ci-dessus peuvent être combinés entre eux pour générer de nouveaux modes de réalisation.

## Revendications

1. Procédé de fonctionnement d'un appareil électronique (2) communiquant sans fil, l'appareil électronique (2) comprenant :

   - un circuit de commande électronique (8) comprenant un émetteur radiofréquence (10) configuré pour émettre un message radiofréquence selon un protocole de communication et
   - une réserve d'énergie électrique (4) rechargeable configurée pour alimenter électriquement l'appareil électronique (2),

   **caractérisé en ce que** le procédé de fonctionnement est mis en œuvre par le circuit de commande électronique (8) et comprend des étapes :

   a) d'acquisition (100), par le circuit de commande électronique (8) de l'appareil électronique (2), d'une trame radiofréquence représentative d'au moins une information destinée à être émise par l'émetteur radiofréquence (10) dans un message radiofréquence ;
   b) de détermination (102), par le circuit de commande (8), de la quantité d'énergie disponible dans la réserve d'énergie (4) ;
   c) de détermination (104), par le circuit de commande (8), de la longueur du message radiofréquence destiné à être émis, le message radiofréquence comprenant au moins la trame radiofréquence acquise ;
   d) de détermination (106) de paramètres d'émission de l'émetteur radiofréquence (10), la détermination (106) étant mise en œuvre par le circuit de commande (8) en fonction des valeurs déterminées de la longueur du message et de la quantité d'énergie disponible dans la réserve d'énergie ;
   e) d'émission (108) du message radiofréquence par l'émetteur radiofréquence (10), en utilisant les paramètres d'émission déterminés.

2. Procédé selon la revendication 1, dans lequel, lors de l'étape b), la détermination (102) de la quantité d'énergie disponible est effectuée à partir de valeurs mesurées de la quantité d'énergie fournie à la réserve d'énergie par un dispositif de récupération d'énergie (6) de l'appareil électronique (2) au cours du temps et à partir de valeurs mesurées de la quantité d'énergie électrique fournie par la réserve d'énergie à l'appareil (2) au cours du temps.

3. Procédé selon la revendication 1, **caractérisé en ce que**, lors de l'étape b), la détermination (102) de la quantité d'énergie disponible est estimée :

   b1) en mesurant (1020) à vide une première grandeur électrique représentative de la quantité d'énergie disponible de la réserve d'énergie (4), de préférence une première tension électrique aux bornes de la réserve d'énergie (4) ;
   b2) en mesurant (1022) une deuxième grandeur électrique représentative de la quantité d'énergie disponible de la réserve d'énergie (4), de préférence une deuxième tension électrique aux bornes de la réserve d'énergie (4), cette mesure étant réalisée suite à un prélèvement d'une quantité d'énergie prédéfinie dans la réserve d'énergie (4) ;
   b3) et en calculant (1024) la valeur de la quantité d'énergie disponible dans la réserve d'énergie (4) à partir des première et deuxième valeurs mesurées.

**4.** Procédé selon l'une quelconque des revendications 1 à 3, dans lequel le procédé comporte, lors de l'étape b), la mesure de la température au sein de l'appareil électronique (2), par un dispositif de mesure de la température (28), et la correction de la quantité d'énergie disponible dans la réserve d'énergie (4) en fonction de la température mesurée.

**5.** Procédé selon l'une quelconque des revendications 1 à 4, dans lequel, l'étape d) comprend la sélection d'un point de fonctionnement (P1, P2, P3, P4, P5, P6) particulier parmi un ensemble (42) de points de fonctionnement de l'émetteur prédéfinis stocké dans une mémoire informatique (22) du circuit de commande (8), l'ensemble (42) de points de fonctionnement prédéfinis définissant des règles de correspondance mettant en relation les points de fonctionnement prédéfinis avec, d'une part, des valeurs ou des intervalles de valeurs de longueurs de messages et, d'autre part, avec des valeurs ou des intervalles de valeurs de quantité d'énergie disponible dans la réserve d'énergie (4), et dans lequel, le point de fonctionnement particulier est sélectionné en identifiant, au sein de l'ensemble (42), le point de fonctionnement prédéfini correspondant aux valeurs déterminées de longueur de message et de quantité d'énergie disponible.

**6.** Procédé selon l'une quelconque des revendications 1 à 5, dans lequel, l'étape d) comprend en outre la détermination (1062) d'une classe de fonctionnement de l'émetteur radiofréquence (10).

**7.** Procédé selon la revendication précédente dans lequel, l'étape d) comprend en outre la détermination (1060) de l'énergie nécessaire à l'émetteur radiofréquence (10) pour émettre un message radiofréquence (60) ayant la longueur (Lt) déterminée avec une énergie rayonnée prédéterminée.

**8.** Procédé selon l'une quelconque des revendications 1 à 7, dans lequel les paramètres d'émission comprennent la classe de fonctionnement et le point de fonctionnement de l'émetteur (10) et dans lequel l'étape d) comprend une sous-étape d'optimisation des classes de fonctionnement et d'un point de fonctionnement de l'émetteur (10) en fonction des valeurs déterminées de la longueur du message et de la quantité d'énergie disponible dans la réserve d'énergie.

**9.** Appareil électronique (2) communiquant sans fil comportant :

- un circuit de commande (8) électronique comportant un émetteur radiofréquence (10) configuré pour émettre un message radiofréquence selon un protocole de communication ;
- une réserve d'énergie électrique (4) rechargeable configurée pour alimenter électriquement l'appareil électronique (2) ;

**caractérisé en ce que** le circuit de commande (8) est programmé pour mettre en œuvre le procédé de fonctionnement selon une des revendications 1 et 4 à 7.

**10.** Appareil électronique (2) selon la revendication précédente, dans lequel l'appareil (2) comporte en outre un dispositif de récupération d'énergie (6) destiné à recharger électriquement la réserve d'énergie (4), et en ce que le circuit de commande (8) est programmé pour mettre en œuvre le procédé de fonctionnement selon une des revendications 2 ou 3.

**11.** Appareil électronique (2) selon l'une quelconque des revendications 9 ou 10, **caractérisé en ce qu'**il comporte en outre un dispositif de mesure de la température (28) destiné à mesurer la température à l'intérieur de l'appareil (2), et **en ce que** le circuit de commande (8) est programmé pour, lors de l'étape b), corriger, en fonction de la température mesurée, la valeur de quantité d'énergie disponible déterminée.

**Patentansprüche**

**1.** Betriebsverfahren eines drahtlos kommunizierenden elektronischen Geräts (2), das elektronische Gerät (2) umfassend:

- eine elektronische Steuerschaltung (8), umfassend einen Hochfrequenzsender (10), der konfiguriert ist, um eine Hochfrequenznachricht gemäß einem Kommunikationsprotokoll zu übertragen, und
- eine wiederaufladbare elektrische Energiereserve (4), die konfiguriert ist, um das elektronische Gerät (2) elektrisch zu versorgen,

**dadurch gekennzeichnet, dass** das Betriebsverfahren durch die elektronische Steuerschaltung (8) implementiert wird und folgende Schritte umfasst:

a) Erfassen (100), durch die elektronische Steuerschaltung (8) des elektronischen Geräts (2), eines Hochfrequenzrahmens, der repräsentativ für mindestens Informationen ist, die dazu bestimmt sind, von dem Hochfrequenzsender (10) in einer Hochfrequenznachricht gesendet zu werden;

b) Bestimmen (102), durch die Steuerschaltung (8), der Menge der in der Energiereserve (4) verfügbaren Energie;

c) Bestimmen (104), durch die Steuerschaltung (8), der Länge der Hochfrequenznachricht, die gesendet werden soll, wobei die Hochfrequenznachricht mindestens den erfassten Hochfrequenzrahmen umfasst;

d) Bestimmen (106) von Emissionsparametern des Hochfrequenzsenders (10), wobei die Bestimmung (106) abhängig von den bestimmten Werten der Länge der Nachricht und der Menge der in der Energiereserve verfügbaren Energie durch die Steuerschaltung (8) implementiert wird;

e) Emittieren (108) der Hochfrequenznachricht durch den Hochfrequenzsender (10) unter Verwendung der ermittelten Emissionsparameter.

**2.** Verfahren nach Anspruch 1, wobei in Schritt b) die Bestimmung (102) der verfügbaren Energiemenge anhand von Messwerten der Energiemenge, die der Energiereserve von einer Energierückgewinnungsvorrichtung (6) des elektronischen Geräts (2) im Laufe der Zeit zugeführt wird, und anhand von Messwerten der Menge an elektrischer Energie, die dem Gerät (2) im Laufe der Zeit von der Energiereserve zugeführt wird, implementiert wird.

**3.** Verfahren nach Anspruch 1, **dadurch gekennzeichnet, dass** in Schritt b) die Bestimmung (102) der verfügbaren Energiemenge geschätzt wird:

b1) durch Messen (1020) im Leerlauf einer ersten elektrischen Größe, die für die verfügbare Energiemenge der Energiereserve (4) repräsentativ ist, vorzugsweise einer ersten elektrischen Spannung an den Klemmen der Energiereserve (4);

b2) durch Messen (1022) einer zweiten elektrischen Größe, die für die verfügbare Energiemenge der Energiereserve (4) repräsentativ ist, vorzugsweise einer zweiten elektrischen Spannung an den Klemmen der Energiereserve (4), wobei diese Messung im Anschluss an eine Entnahme einer vordefinierten Energiemenge aus der Energiereserve (4) implementiert wird;

b3) und durch Berechnen (1024) des Werts der in der Energiereserve (4) verfügbaren Energiemenge aus dem ersten und dem zweiten gemessenen Wert.

**4.** Verfahren nach einem der Ansprüche 1 bis 3, wobei das Verfahren in Schritt b) das Messen der Temperatur innerhalb des elektronischen Geräts (2) durch eine Temperaturmessvorrichtung (28) und das Korrigieren der Menge an verfügbarer Energie in der Energiereserve (4) abhängig von der gemessenen Temperatur umfasst.

**5.** Verfahren nach einem der Ansprüche 1 bis 4, wobei Schritt d) das Auswählen eines besonderen Betriebspunkts (P1, P2, P3, P4, P5, P6) aus einem Satz (42) von vordefinierten Betriebspunkten des Senders umfasst, die in einem Computerspeicher (22) der Steuerschaltung (8) gespeichert sind, wobei der Satz (42) von vordefinierten Betriebspunkten Korrespondenzregeln definiert, die vordefinierten Betriebspunkte mit Werten oder Intervallen von Werten von Nachrichtenlängen einerseits und Werten oder Intervallen von Werten von in der Energiereserve (4) verfügbaren Energiemengen andererseits in Beziehung setzen, und wobei der besondere Betriebspunkt ausgewählt wird, indem innerhalb des Satzes (42) der vordefinierte Betriebspunkt identifiziert wird, der den bestimmten Werten der Nachrichtenlänge und der verfügbaren Energiemenge entspricht.

**6.** Verfahren nach einem der Ansprüche 1 bis 5, wobei Schritt d) ferner das Bestimmen (1062) einer Betriebsklasse des Hochfrequenzsenders (10) umfasst.

**7.** Verfahren nach dem vorherigen Anspruch, wobei Schritt d) ferner das Bestimmen (1060) der Energie umfasst, die der Hochfrequenzsender (10) benötigt, um eine Hochfrequenznachricht (60) mit der bestimmten Länge (Lt) mit einer vorbestimmten abgestrahlten Energie zu senden.

**8.** Verfahren nach einem der Ansprüche 1 bis 7, wobei die Sendeparameter die Betriebsklasse und den Betriebspunkt des Senders (10) umfassen und wobei Schritt d) einen Unterschritt eines Optimierens der Betriebsklassen und eines Betriebspunkts des Senders (10) abhängig von den bestimmten Werten der Nachrichtenlänge und der Menge der in der Energiereserve verfügbaren Energie umfasst.

9. Drahtlos kommunizierendes elektronisches Gerät (2), umfassend:

   - eine elektronische Steuerschaltung (8), umfassend einen Hochfrequenzsender (10), der konfiguriert ist, um eine Hochfrequenznachricht gemäß einem Kommunikationsprotokoll zu senden;
   - eine wiederaufladbare elektrische Energiereserve (4), die konfiguriert ist, um das elektronische Gerät (2) elektrisch zu versorgen;

   **dadurch gekennzeichnet, dass** die Steuerschaltung (8) programmiert ist, um das Betriebsverfahren nach einem der Ansprüche 1 und 4 bis 7 zu implementieren.

10. Elektronisches Gerät (2) nach dem vorherigen Anspruch, wobei das Gerät (2) ferner eine Energierückgewinnungsvorrichtung (6) umfasst, die zum elektrischen Aufladen der Energiereserve (4) bestimmt ist, und dass die Steuerschaltung (8) programmiert ist, um das Betriebsverfahren nach einem der Ansprüche 2 oder 3 zu implementieren.

11. Elektronisches Gerät (2) nach einem der Ansprüche 9 oder 10, **dadurch gekennzeichnet, dass** es zusätzlich eine Temperaturmessvorrichtung (28) zum Messen der Temperatur im Inneren des Geräts (2) umfasst, und dass die Steuerschaltung (8) programmiert ist, um in Schritt b) den ermittelten Wert für die verfügbare Energiemenge abhängig von der gemessenen Temperatur zu korrigieren.

**Claims**

1. An operating method for a wirelessly communicating electronic device (2), the electronic device (2) comprising:

   - an electronic control circuit (8) comprising a radiofrequency transmitter (10) configured to transmit a radiofrequency message according to a communication protocol and
   - a rechargeable electrical power storage means (4) configured to supply electricity to the electronic device (2),

   **characterized in that** the operating method is implemented by the electronic control circuit (8) and comprises the following steps:

   a) acquisition (100), by the electronic control circuit (8) of the electronic device (2), of a radiofrequency frame representative of at least one data item intended to be transmitted by the radiofrequency transmitter (10) in a radiofrequency message;
   b) determination (102), by the control circuit (8), of the amount of power available in the power storage means (4);
   c) determination (104), by the control circuit (8), of the length of the radiofrequency message to be transmitted, the radiofrequency message comprising at least the acquired radiofrequency frame;
   d) determination (106) of transmission parameters of the radiofrequency transmitter (10), the determination (106) being carried out by the control circuit (8) according to the determined values for the length of the message and the amount of power available in the power storage means;
   e) transmission (108) of the radiofrequency message by the radiofrequency transmitter (10), using the determined transmission parameters.

2. The method according to claim 1, wherein, during step b), the determination (102) of the available amount of energy is made from measured values of the amount of energy supplied to the power storage means by an energy harvesting apparatus (6) of the electronic device (2) over time and from measured values of the amount of electrical energy supplied by the power storage means to the device (2) over time.

3. The method according to claim 1, **characterized in that**, during step b), the determination (102) of the amount of available energy is estimated:

   b1) by measuring (1020), with no load, a first electrical quantity representative of the available amount of energy of the power storage means (4), preferably a first voltage across the terminals of the power storage means (4);
   b2) by measuring (1022) a second electrical quantity representative of the available amount of energy of the power storage means (4), preferably a second voltage across the terminals of the power storage means (4), this measurement being done after withdrawing a predefined amount of energy from the power storage means (4);
   b3) and computing (1024) the value of the amount of energy available in the power storage means (4) from the first and second measured values.

4. The method according to any one of claims 1 to 3, wherein the method comprises, during step b), measuring the temperature within the electronic device (2), using a temperature measurement apparatus (28), and correcting the amount of energy available in the power storage means (4) based on the measured temperature.

5. The method according to any one of claims 1 to 4, wherein step d) comprises selecting a specific operating point (P1, P2, P3, P4, P5, P6) among a set (42) of predefined operating points of the transmitter stored in a computer memory (22) of the control circuit (8), the set (42) of predefined operating points defining correspondence rules relating the predefined operating points and, on the one hand, values or ranges of values of message lengths, and on the other hand, values or ranges of values of amount of energy available in the power storage means (4), and wherein the specific operating point is selected by identifying, within the set (42), the predefined operating point corresponding to the determined values of the message length and the available amount of energy.

6. The method according to any one of claims 1 to 5, wherein step d) further comprises determining (1062) an operating class of the radiofrequency transmitter (10).

7. The method according to the preceding claim, wherein step d) further comprises determining (1060) the energy necessary for the radiofrequency transmitter (10) to transmit a radiofrequency message (60) having the determined length (Lt) with a predetermined radiated energy.

8. The method according to any one of claims 1 to 7, wherein the transmission parameters comprise the operating class and the operating point of the transmitter (10) and wherein step d) comprises a sub-step for optimizing the operating classes and an operating point of the transmitter (10) based on the determined values of the length of the message and of the amount of energy available in the power storage means.

9. A wirelessly communicating electronic device (2), comprising:

- an electronic control circuit (8) comprising a radiofrequency transmitter (10) configured to transmit a radiofrequency message according to a communication protocol and
- a rechargeable electrical power storage means (4) configured to supply electricity to the electronic device (2);

**characterized in that** the control circuit (8) is programmed to carry out the operating method according to one of claims 1 and 4 to 7.

10. The electronic device (2) according to the preceding claim, wherein the device (2) further comprises an energy harvesting apparatus (6) intended to recharge the power storage means (4) electrically, and in that the control circuit (8) is programmed to carry out the operating method according to one of claims 2 or 3.

11. The electronic device (2) according to any one of claims 9 or 10, **characterized in that** it further comprises a temperature measuring apparatus (28) intended to measure the temperature inside the device (2), and **in that** the control circuit (8) is programmed to correct, during step b), the value of the determined amount of available energy based on the measured temperature.

Fig.1

Fig.4

*Fig.2*

-100-

↓

-102-

↓

-104-

↓

-106-

↓

-108-

*Fig.3*

-1040-

↓

-1042-

↓

-1044-

*Fig.7*

-1060-

↓

-1062-

↓

-1064-

*Fig.8*

54    50                                    42

| | E1 | E2 | E3 | E4 |
|---|---|---|---|---|
| L1 | P1 | P1 | P2 | P3 |
| L2 | P1 | P2 | P2 | P3 |
| L3 | P2 | P3 | P4 | P5 |
| L4 | P3 | P4 | P5 | P6 |

52

*Fig.5*

60

MESSAGE A ENVOYER

| TRAME 1 | | TRAME 2 | | TRAME 3 |

62    64    62    64    62

L         L         L

LONGUEUR

*Fig.6*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2978276 A1